(19) Europäisches Patentamt
European Patent Office
Office européen des brevets

(11) **EP 3 261 862 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **16700686.5**

(22) Anmeldetag: **14.01.2016**

(51) Int Cl.:
*B60G 17/0165* (2006.01)   *B60G 17/019* (2006.01)
*G01C 9/00* (2006.01)   *B60G 17/0195* (2006.01)
*B60W 40/076* (2012.01)   *B60W 30/02* (2012.01)
*B60W 10/22* (2006.01)

(86) Internationale Anmeldenummer:
**PCT/EP2016/000061**

(87) Internationale Veröffentlichungsnummer:
**WO 2016/134811 (01.09.2016 Gazette 2016/35)**

(54) **VERFAHREN ZUM KOMPENSIEREN EINER NEIGUNG**

METHOD FOR COMPENSATING FOR AN INCLINATION

PROCÉDÉ DE COMPENSATION D'INCLINAISON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2015 DE 102015002603**

(43) Veröffentlichungstag der Anmeldung:
**03.01.2018 Patentblatt 2018/01**

(73) Patentinhaber: **Audi AG**
**85045 Ingolstadt (DE)**

(72) Erfinder:
• UNGER, Andreas
  85080 Gaimersheim (DE)
• GÖHRLE, Christoph
  85049 Ingolstadt (DE)

(56) Entgegenhaltungen:
EP-A2- 0 925 967       WO-A1-02/20318
DE-A1-102004 019 928   DE-A1-102006 026 937
DE-A1-102012 024 984   DE-A1-102012 216 205
GB-A- 2 391 327        GB-A- 2 510 417
JP-A- 2003 097 945     JP-A- 2009 276 109
US-A- 5 013 067        US-A1- 2014 309 803

**EP 3 261 862 B1**

**Beschreibung**

Die Erfindung betrifft ein Verfahren und ein System zum Kompensieren einer Neigung eines Aufbaus eines Fahrzeugs.

Eine Lage eines Fahrzeugs ändert sich während einer Fahrt in Abhängigkeit einer Neigung bzw. Lage einer Straße, die von dem Fahrzeug befahren wird. Winkel zum Erfassen der Lage des Fahrzeugs können durch Sensoren erfasst werden.

Ein Verfahren zum Steuern eines Systems eines Fahrzeugs ist in der Druckschrift DE 10 2006 026 937 A1 beschrieben. Dabei wird ein Stabilitätsindex bestimmt. Außerdem werden ein erster und ein zweiter Beobachter bereitgestellt, die auf Grundlage von Betriebsgrößen des Fahrzeugs eine Referenz-Quergeschwindigkeit sowie eine Quergeschwindigkeit bestimmen, aus denen eine Ausgangs-Quergeschwindigkeit sowie eine Ausgangs-Längsgeschwindigkeit bestimmt werden.

Ein Verfahren zum Bestimmen einer Soll-Kurvenneigung eines Fahrzeugs beim Befahren eines kurvenförmigen Fahrbahnabschnitts ist aus der Druckschrift DE 10 2012 024 984 A1 bekannt. Hierbei wird die Soll-Kurvenneigung des Fahrzeugs in Abhängigkeit einer erfassten Fahrbahnkrümmung bestimmt. Außerdem wird eine optische Oberflächenbeschaffenheit des kurvenförmigen Fahrbahnabschnitts berücksichtigt.

Ein Verfahren zum Verarbeiten von Sensordaten in einem Fahrzeug ist in der Druckschrift DE 10 2012 216 205 A1 beschrieben, wobei Fahrdynamikdaten und Chassissensordaten des Fahrzeugs erfasst und gefiltert werden.

Zudem ist aus der Druckschrift DE 10 2004 019 928 A1 ein Verfahren zur Erkennung einer Hang- oder Steigungssituation für ein Fahrzeug bekannt.

GB 2 391 327 A offenbart ein weiteres relevantes Verfahren zur Erkennung einer Fahrsituation.

Vor diesem Hintergrund werden ein Verfahren und ein System mit den Merkmalen der unabhängigen Patentansprüche vorgestellt. Ausgestaltungen des Verfahrens und des Systems gehen aus den abhängigen Patentansprüchen und der Beschreibung hervor.

Das erfindungsgemäße Verfahren ist zum Kompensieren einer Neigung eines Fahrzeugs, das eine geneigte Fahrbahn befährt, in zumindest einer Raumrichtung vorgesehen. Das Fahrzeug weist einen Aufbau und ein aktives Fahrwerk mit mehreren Rädern auf, die sich mit der Fahrbahn in Kontakt befinden. Jedes Rad ist über einen in seiner Länge relativ zum Aufbau in vertikaler Richtung verstellbaren Aktor an einem dem Rad zugeordneten Aufhängepunkt mit dem Aufbau verbunden. Bei dem Verfahren wird zunächst eine Neigung des Aufbaus in die zumindest eine Raumrichtung ermittelt, wobei für mindestens zwei Räder je ein vertikaler Abstand zu dem dem jeweiligen Rad zugeordneten Aufhängepunkt des Aufbaus erfasst wird. Über die ermittelten Abstände wird eine Neigung des Fahrwerks in die zumindest eine Raumrichtung durch Transformation des vertikalen Abstands der mindestens zwei Räder zu dem Aufbau mit einer Transformationsmatrix:

$$T = \begin{bmatrix} l_v & l_v & -l_h & -l_h \\ t_v & -t_v & t_h & -t_h \end{bmatrix}.$$

berechnet. Außerdem wird die Neigung der Fahrbahn in die zumindest eine Raumrichtung aus einer Differenz der Neigung des Aufbaus in die zumindest eine Raumrichtung und der Neigung des Fahrwerks in die zumindest eine Raumrichtung ermittelt. Darauf basierend wird jeweils ein Wert für mindestens einen Winkel $\phi_s$ als Wankwinkel und/oder $\theta_s$ als Nickwinkel, um den die Fahrbahn in die zumindest eine Raumrichtung geneigt ist, ermittelt. Weiterhin wird jeweils ein Grenzwert $\phi_{s,lim}$, $\theta_{s,lim}$ für den Wert des mindestens einen Winkels $\phi_s$, $\theta_s$ vorgegeben. Ergänzend werden Übersetzungsverhältnisse $i_{VA}$, $i_{HA}$ für einen Abstand des mindestens einen Aktors bezogen auf den Aufbau und für einen Abstand des mindestens einen Rads bezogen auf den Aufbau berücksichtigt. Ein Soll-Wert für eine Änderung der Länge des mindestens einen Aktors zum Kompensieren der Neigung wird durch:

$$\overrightarrow{z_{akt}} = \mathrm{diag}(i_{VA}, i_{VA}, i_{HA}, i_{HA})T^T \begin{bmatrix} \phi_{s,lim} \\ \theta_{s,lim} \end{bmatrix}.$$

bestimmt.

Die Neigung des Fahrwerks in die mindestens eine Raumrichtung wird durch Transformation der vertikalen Abstände der mindestens zwei Räder zu dem Aufbau mit der Transformationsmatrix:

$$T = \begin{bmatrix} l_v & l_v & -l_h & -l_h \\ t_v & -t_v & t_h & -t_h \end{bmatrix}$$

ermittelt. Eine vordere, longitudinale Strecke $l_v$ beschreibt hierbei einen Abstand eines jeweiligen vorderen Rads von einem Schwerpunkt des Aufbaus in longitudinaler Raumrichtung. Eine hintere, longitudinale Strecke $l_h$ beschreibt den Abstand eines jeweiligen hinteren Rads von dem Schwerpunkt in longitudinaler Raumrichtung. Eine vordere, transversale Strecke $t_v$ beschreibt den Abstand des jeweiligen vorderen Rads von dem Schwerpunkt in transversaler Raumrichtung. Eine hintere, transversale Strecke $t_h$ beschreibt den Abstand des jeweiligen hinteren Rads von dem Schwerpunkt in transversaler Raumrichtung.

In Ausgestaltung werden die Übersetzungsverhältnisse $i_{VA}$, $i_{HA}$ über einen üblicherweise konstanten, messbaren Abstand jeweils eines Aktors von dem Schwerpunkt des Aufbaus und jeweils eines Rads von dem Schwerpunkt des Aufbaus berechnet. Dabei sind für Abstände der Räder die Strecken $l_v$, $l_h$, $t_v$ und $t_h$ zu berücksichtigen.

Üblicherweise bzw. definitionsgemäß wird bei Vorliegen einer Steigungsauffahrt ein negativer Nickwinkel $\theta_s$ und bei Vorliegen einer Steigungsabfahrt ein positiver Nickwinkel $\theta_s$ ermittelt.

Der jeweilige Grenzwert $\phi_{s,lim}$, $\theta_{s,lim}$ für den Wert des mindestens einen Winkels $\phi_s$, $\theta_s$ der Neigung der Fahrbahn wird im Fall des Neigungswinkels durch:

$$\phi_{s,lim} = \begin{cases} \phi_{s,max} & \text{wenn } \phi_s > \phi_{s,max} \\ \phi_{s,min} & \text{wenn } \phi_s < \phi_{s,min} \\ \phi_s & \text{sonst} \end{cases}$$

und im Fall des Nickwinkels durch:

$$\theta_{s,lim} = \begin{cases} \theta_{s,max} & \text{wenn } \theta_s > \theta_{s,max} \\ \theta_{s,min} & \text{wenn } \theta_s < \theta_{s,min} \\ \theta_s & \text{sonst} \end{cases}$$

vorgegeben.

In der Regel wird ein Betrag von $\theta_{s,min}$ im Fall der Steigungsauffahrt größer als ein Betrag von $\theta_{s,max}$ im Fall der Steigungsabfahrt gewählt.

Im Rahmen des Verfahrens wird zum Ermitteln der Neigung des Aufbaus ein erstes, aufbaufestes Koordinatensystem und zum Ermitteln der Neigung des Fahrwerks ein zweites fahrwerkfestes Koordinatensystem verwendet. Ein drittes, inertiales Koordinatensystem wird als Referenz-Koordinatensystem verwendet, das auf die Gravitationskraft bezogen ist.

In Ausgestaltung wird die Neigung des Aufbaus bezüglich des Referenz-Koordinatensystems über ein Quaternion beschrieben.

Außerdem ist möglich, dass ein Strapdown-Algorithmus verwendet wird, mit dem vorgesehen ist, dass zum Ermitteln einer korrigierten Beschleunigung des Fahrzeugs eine sensorisch gemessene Beschleunigung um eine Zentrifugalbeschleunigung und die Gravitationsbeschleunigung korrigiert wird. Daraus wird eine Geschwindigkeit des Fahrzeugs in einer Ebene bestimmt und die Neigung des Aufbaus berechnet.

Das erfindungsgemäße System ist zum Kompensieren einer Neigung eines Fahrzeugs in zumindest einer Raumrichtung, das eine geneigte Fahrbahn befährt, ausgebildet. Das Fahrzeug weist einen Aufbau und ein aktives Fahrwerk mit mehreren, üblicherweise vier Rädern auf, die sich mit der Fahrbahn in Kontakt befinden. Das System weist mehrere Sensoren und ein Kontrollgerät auf. Jedes Rad ist über einen in seiner Länge verstellbaren Aktor an einem dem Rad zugeordneten Aufhängepunkt mit dem Aufbau verbunden. Mindestens ein erster Sensor ist dazu ausgebildet, eine Neigung des Aufbaus in die zumindest eine Raumrichtung zu ermitteln. Mindestens ein zweiter Sensor ist dazu ausgebildet, für mindestens zwei Räder einen vertikalen Abstand zu dem dem jeweiligen Rad zugeordneten Aufhängepunkt des Aufbaus zu erfassen. Das Kontrollgerät ist dazu ausgebildet, über ermittelte Abstände der mindestens zwei Räder eine Neigung des Fahrwerks in die zumindest eine Raumrichtung durch Transformation des vertikalen Abstands der mindestens zwei Räder zu dem Aufbau mit einer Transformationsmatrix:

$$T = \begin{bmatrix} l_v & l_v & -l_h & -l_h \\ t_v & -t_v & t_h & -t_h \end{bmatrix}$$

zu berechnen.

Außerdem ist das Kontrollgerät dazu ausgebildet, die Neigung der Fahrbahn in die zumindest eine Raumrichtung aus einer Differenz der Neigung des Aufbaus in die zumindest eine Raumrichtung und der Neigung des Fahrwerks in die zumindest eine Raumrichtung zu ermitteln, und jeweils einen Wert für mindestens einen Winkel $\phi_s$, $\theta_s$, um den die Fahrbahn in die zumindest eine Raumrichtung geneigt ist, zu ermitteln. Zudem ist vorgesehen, dass jeweils ein Grenzwert $\phi_{s,lim}$, $\theta_{s,lim}$ für den Wert des mindestens einen Winkels $\phi_s$, $\theta_s$ vorgegeben ist. Das Kontrollgerät ist zudem dazu ausgebildet, Übersetzungsverhältnisse $i_{VA}$, $i_{HA}$ für einen Abstand des mindestens einen Aktors bezogen auf den Aufbau und für einen Abstand des mindestens einen Rads bezogen auf den Aufbau zu berücksichtigen. Weiterhin ist das Kontrollgerät dazu ausgebildet, einen Soll-Wert für eine Änderung einer Länge des mindestens einen Aktors durch:

$$\overrightarrow{z_{akt}} = \text{diag}(i_{VA}, i_{VA}, i_{HA}, i_{HA}) T^T \begin{bmatrix} \phi_{s,lim} \\ \theta_{s,lim} \end{bmatrix}$$

zu bestimmen.

Der mindestens eine zweite Sensor ist als Abstandssensor ausgebildet, mit dem ein Abstand eines jeweiligen Rads zu dem Aufbau zu ermitteln ist. In Ausgestaltung sind die in ihrer Länge verstellbaren Aktoren ebenfalls als Komponenten des Systems ausgebildet.

Mit dem Verfahren und dem System ist eine Kontrolle und somit eine Regelung und/oder Steuerung der Horizöntierung bzw. der horizontalen Ausrichtung des Aufbaus des Fahrzeugs bei einer Steigungsauffahrt sowie einer Steigungsabfahrt auf einer zu befahrenden Fahrbahn aber auch bei Vorliegen einer Querneigung der Fahrbahn zu erreichen. Demnach werden Längen der Aktoren bzw. Aktuatoren des aktiven Fahrwerks des Fahrzeugs um die Soll-Werte $\overrightarrow{z_{akt}}$ angepasst und durch Ausrichten der Neigung des Aufbaus eine Neigung der Fahrbahn kompensiert. -Dabei ist zunächst zu erkennen, ob das Fahrzeug eine Steigungsauffahrt und somit eine bergauf orientierte Fahrbahn oder eine Steigungsabfahrt und somit eine bergab orientierte Fahrbahn befährt. Darauf basierend wird eine Maßnahme zur horizontalen Ausrichtung des Aufbaus ergriffen, wobei im Fall der Steigungsauffahrt, bei negativem Nickwinkel, eine stärkere horizontale Ausrichtung des Aufbaus als im Fall der Steigungsabfahrt, bei positivem Nickwinkel, ergriffen wird. Somit ist bei der Steigungsabfahrt die Neigung der Fahrbahn in einem geringeren Maß als im Fall der Steigungsauffahrt zu kompensieren.

Bei einer Steigungsauffahrt wird das Fahrzeug durch die Aktoren hinten angehoben und vorne abgesenkt, wodurch für Insassen des Fahrzeugs eine bessere Sicht und ein erhöhter Komfort zu erreichen sind. Dagegen wird das Fahrzeug bei einer Steigungsabfahrt durch die Aktoren vorne angehoben und hinten abgesenkt, üblicherweise jedoch im geringeren Maße als im Fall einer Steigungsauffahrt, um die Sicht der Insassen nicht zu verschlechtern und einen Bodenfreigang des Fahrzeugs bei einem Übergang der Steigungsabfahrt bzw. einer Hangabfahrt in die waagrecht ausgerichtete Fahrbahn sicherzustellen. Die Insassen des Fahrzeugs können somit aufrechter sitzen und müssen sich bei geneigten Fahrbahnen im Innenraum des Fahrzeugs weniger stark abstützen. Üblicherweise wird die Sicht für den Fahrer deutlich verbessert.

Im Rahmen des Verfahrens wird bzw. werden der Nickwinkel und/oder der Wankwinkel des Aufbaus des Fahrzeugs bezüglich des inertialen Koordinatensystems geschätzt. Mindestens einer dieser Winkel gibt die Neigung des Aufbaus bezüglich der Horizontalen an, die über die Achsen in den Raumrichtungen $x_{ref}$, $y_{ref}$, $z_{ref}$ des inertialen Koordinatensystems definiert ist. Über die Abstandssensoren, bspw. Radeinfederungssensoren, wird aus den Winkeln des Aufbaus im inertialen Koordinatensystem der Winkel der Fahrbahn in Nick- und Wankrichtung des Fahrzeugs bestimmt, üblicherweise berechnet. Anhand des Werts und Vorzeichens des jeweiligen Winkels wird erkannt, ob sich das Fahrzeug auf einer Steigung befindet und ob es sich um eine Steigungsauffahrt oder Steigungsabfahrt handelt.

Ein negativer Nickwinkel deutet eine Steigungsauffahrt an, wohingegen ein positiver Nickwinkel eine Steigungsabfahrt andeutet. Der ermittelte Nickwinkel des Aufbaus wird in eine Vorsteuerung umgerechnet, wobei bei Vorliegen eines positives Nickwinkel die beiden vorderen Aktoren des Fahrwerks ausgefahren und die beiden hinteren Aktoren eingefahren werden. Bei einem identifizierten negativen Nickwinkel werden dagegen die vorderen Aktoren des Fahrwerks ein- und die beiden hinteren Aktoren ausgefahren.

Um zu erreichen, dass der Aufbau bei einer Steigungsabfahrt nicht so stark horizontal ausgerichtet wird, wird der berechnete Nickwinkel im Inertialsystem beschränkt, so dass sich für den Nickwinkel zur Korrektur bzw. Kompensation der Neigung des Aufbaus keine zu großen negativen Werte als Resultat ergeben und sich somit keine zu starke horizontale Ausrichtung bei der Steigungs- bzw. Hangabfahrt ergibt.

Die genannten Vorgehensweisen sind bei einer Vorwärtsfahrt des Fahrzeugs umzusetzen. Bei einer Rückwärtsfahrt wird entweder keine oder allenfalls eine horizontale Ausrichtung des Aufbaus oder eine bezogen auf die Vorwärtsfahrt umgekehrte Änderung einer Länge der Aktoren bereitgestellt. Falls rückwärts eine Steigungsauffahrt durchzuführen ist, wird eine stärkere horizontale Ausrichtung umgesetzt. Falls rückwärts eine Steigungsabfahrt zu befahren ist, ist lediglich eine geringe horizontale Ausrichtung zu erreichen, um den Insassen eine gute Sicht zu ermöglichen.

Bei der horizontalen Ausrichtung des Aufbaus bei der Steigungsauffahrt, bzw. -abfahrt wird in Ausgestaltung als Ergänzung oder Alternative eine horizontale Ausrichtung bei Vorliegen einer Querneigung der Fahrbahn umgesetzt. Demnach ist zur Kompensation einer Neigung des Aufbaus bezüglich des inertialen Koordinatensystems eine Anpassung jeweiliger Längen der Aktoren unter Berücksichtigung eines Nickwinkels und Wankwinkels zu kombinieren. Zur Kompensation einer Querneigung als Neigung hinsichtlich eines Wankwinkels ist analog wie im Fall des Nickwinkels vorzugehen. Demnach wird aus dem Wankwinkel bezüglich des inertialen Koordinatensystems eine Vorsteuerrung für die Aktoren berechnet und somit ermittelt, wobei zwischen einer Querneigung nach links oder rechts nicht unterschieden wird. In diesem Fall ist ein Betrag von $\theta_{s,max}$ üblicherweise genauso groß wie ein Betrag von $\theta_{s,min}$.

Unabhängig davon, welcher Winkel, d. h. Nick- und/oder Wankwinkel, in welcher Richtung berücksichtigt wird, ist mit dem aktiven Fahrwerk eine Kompensation der Neigung der Fahrbahn umzusetzen.

Bei einer möglichen Umsetzung des Verfahrens wird ein jeweiliger Winkel und somit der Nickwinkel und/oder Wankwinkel des Fahrzeugs, üblicherweise des Aufbaus des Fahrzeugs, bezüglich des intertialen Koordinatensystem in Nickrichtung und/oder Wankrichtung ermittelt und über das Vorzeichen des Winkels zwischen der Steigungsauffahrt und -abfahrt oder bei Vorliegen einer in Querrichtung geneigten Fahrbahn zwischen einer Neigung nach links oder rechts unterschieden. Dabei kann auch die Nickrichtung und Wankrichtung in Kombination kompensiert werden. Eine eventuell vorliegende Neigung des Aufbaus ist bezüglich des inertialen Koordinatensystems und somit einer horizontalen Ebene, die über das Schwerefeld der Erde ausgerichtet und/oder definiert ist, zu kompensieren.

Im Rahmen des Verfahrens ist der Aufbau des Fahrzeugs, um diesen zu horizontieren bzw. horizontal auszurichten, nicht unbedingt exakt parallel zum Horizont auszurichten. Ein Maß einer vorzunehmenden horizontalen Ausrichtung ist in Ausgestaltung applizierbar festzusetzen und somit zu definieren. Ein derartiges Maß ist abhängig von einer Ausgangslage des Aufbaus parallel zum Horizont, z. B. zu 50 % zu wählen. Das Maß für die Neigung ist über die Grenzwerte $\phi_{s,lim}$, $\theta_{s,lim}$ einstellbar.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

Figur 1 zeigt in schematischer Darstellung ein Bespiel für ein Fahrzeug mit einer Ausführungsform des erfindungsgemäßen Systems.

Figur 2 zeigt ein Diagramm zu einer Ausführungsform des erfindungsgemäßen Verfahrens.

Figur 3 zeigt in schematischer Darstellung ein Detail des Fahrzeugs aus Figur 1.

Figur 4 zeigt das Fahrzeug aus Figur 1 bei unterschiedlichen Varianten der Ausführungsform des erfindungsgemäßen Verfahrens.

Die Figuren werden zusammenhängend und übergreifend beschrieben, gleiche Bezugsziffern bezeichnen dieselben Komponenten.

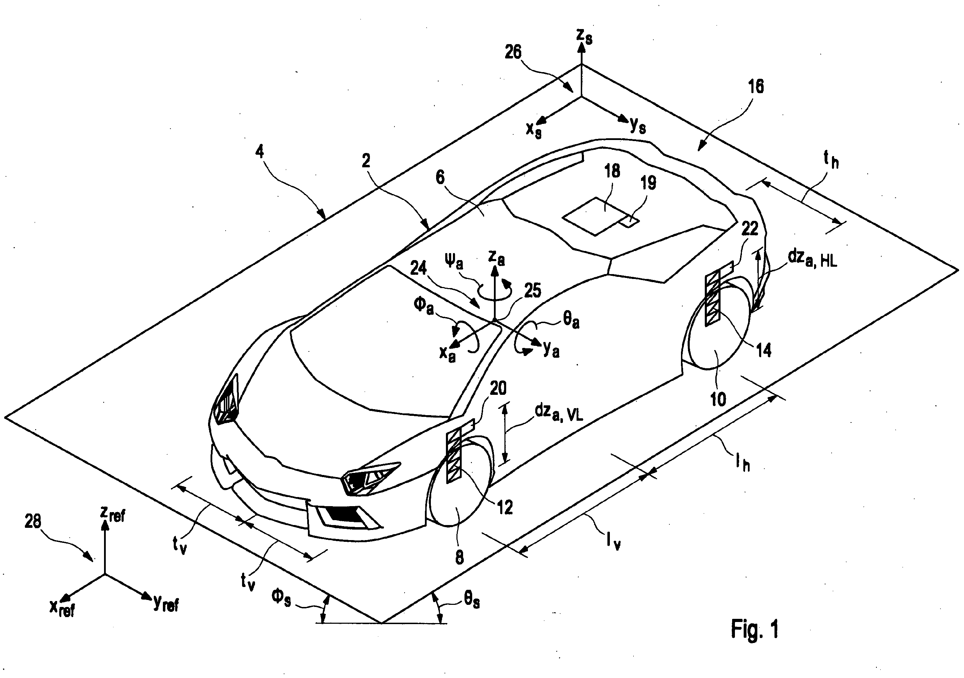

In Figur 1 sind ein als Kraftfahrzeug ausgebildetes Fahrzeug 2 und eine als Straße ausgebildete Fahrbahn 4, auf der sich das Fahrzeug 2 während einer Fahrt bewegt, schematisch dargestellt. Dabei umfasst das Fahrzeug 2 einen Aufbau 6 und vier zur Fortbewegung des Fahrzeugs 2 vorgesehene Räder 8, 10, von denen in Figur 1 lediglich ein vorderes linkes Rad 8 und ein hinteres linkes Rad 10 gezeigt sind. Jedes Rad 8, 10 ist zumindest über einen aktiven Aktor 12, 14 mit dem Aufbau 6 verbunden, wobei die Räder 8, 10 und Aktoren 12, 14 als Komponenten eines aktiven Fahrwerks des Fahrzeugs 2 ausgebildet sind.

Die Ausführungsform des erfindungsgemäße Systems 16 umfasst als Komponenten ein Kontrollgerät 18, mindestens einen ersten Sensor 19 zum Bestimmen der Neigung des Aufbaus 6 sowie mehrere, hier vier als Abstandssensoren 20, 22 ausgebildete, zweite Sensoren, von denen in Figur 1 lediglich zwei dargestellt sind, wobei jedem Rad 8, 10 ein derartiger Abstandssensor 20, 22 zugeordnet ist. Der mindestens eine erste Sensor 19 und die Abstandssensoren 20, 22 sind zugleich als Komponenten einer Sensoranordnung des Systems 16 ausgebildet. Weiterhin umfassen die Sensoranordnung und somit das System 16 nicht weiter dargestellte Sensoren zum Bestimmen, in der Regel zum Messen, mindestens einer kinetischen Größe, üblicherweise einer Geschwindigkeit und/oder Beschleunigung, des Fahrzeugs 2 und/oder des Aufbaus 6.

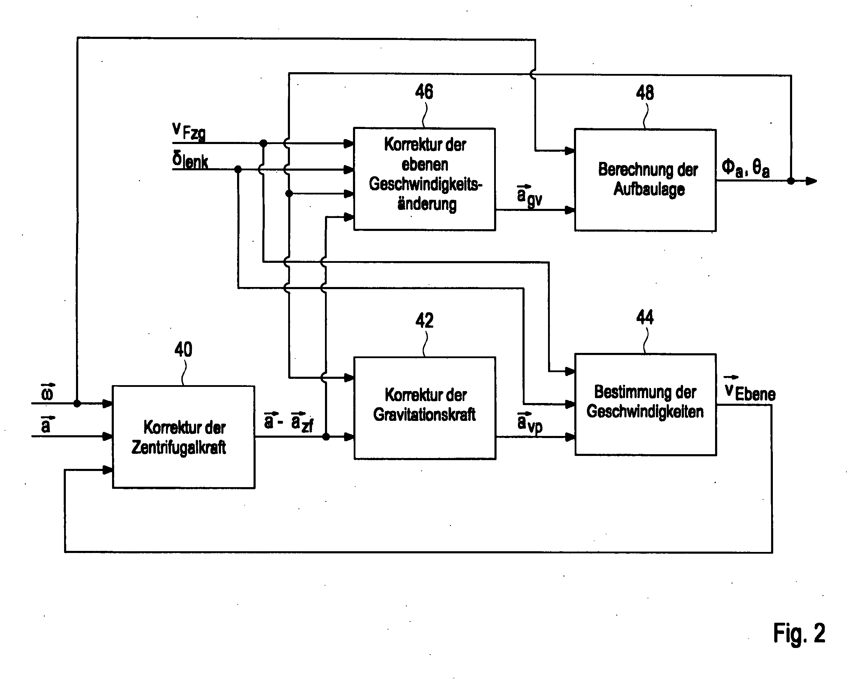

Die nachfolgend u. a. anhand des Diagramms aus Figur 2 beschriebene Ausführungsform des erfindungsgemäßen Verfahrens ist mit der in Figur 1 schematisch dargestellten Ausführungsform des erfindungsgemäßen Systems 16 durchzuführen, wobei Schritte der Ausführungsform des Verfahrens durch das Kontrollgerät 18 zu kontrollieren und somit zu steuern und/oder zu regeln sind.

Außerdem sind in Figur 1 drei Koordinatensysteme 24, 26, 28 sowie diverse, hier geometrische Parameter dargestellt.

Dabei ist ein erstes, aufbaufestes Koordinatensystem 24 dem Aufbau 6 des Fahrzeugs 2 zugeordnet, wobei dessen Ursprung im Schwerpunkt 25 des Aufbaus 6 liegt. Das erste Koordinatensystem 24 umfasst eine erste Achse in Raumrichtung $x_a$, die longitudinal zu dem Aufbau 6 sowie parallel zu einer Fahrtrichtung des Fahrzeugs 2 orientiert ist. Eine zweite Achse ist in Raumrichtung $y_a$, die transversal zu dem Aufbau 6 sowie parallel zu Achsen des Fahrzeugs 2, die sich zwischen jeweils zwei Rädern 8, 10 des Fahrzeugs 2 erstrecken, orientiert. Eine dritte Achse ist in Raumrichtung $z_a$ parallel zu einer Hochachse des Aufbaus 6 orientiert. Alle drei genannten Achsen und somit Raumrichtungen $x_a$, $y_a$, $z_a$ sind zueinander senkrecht orientiert. Dabei ist in Ausgestaltung vorgesehen, dass die beiden erstgenannten Achsen und somit die Raumrichtungen $x_a$ und $y_a$ eine horizontale Ebene des Fahrzeugs 2 aufspannen, in der der Schwerpunkt 25 liegt.

Weiterhin zeigt Figur 1 zwei Beispiele für vertikal orientierte Abstände $dz_{a,VL}$, $dz_{a,HL}$. Ein erster Abstand $dz_{a,VL}$ bezieht sich auf eine Distanz zwischen dem Rad 8 vorne links und dem Aufbau 6. Ein zweiter Abstand $dz_{a,HL}$ bezieht sich auf eine Distanz zwischen dem Rad 10 hinten links und dem Aufbau 6. Diese Abstände $dz_{a,VL}$, $dz_{a,HL}$ sind entlang der Aktoren 12, 14 orientiert und durch die den Rädern 8, 10 zugeordneten Abstandssensoren 20, 22 zu erfassen.

Abstände der Räder 8, 10 zu dem Schwerpunkt 25 des Aufbaus 6 in einer zu der horizontalen Ebene parallelen Ebene sind hier über die Längen bzw. Seitenlängen oder Strecken $t_v$, $t_h$, $l_h$, $l_v$ zu definieren. Hierbei sind für das Rad 8 vorne links eine vordere, transversale Strecke $t_v$, die den Abstand des Rads 8 von dem Schwerpunkt 25 in transversaler Raumrichtung beschreibt, und eine vordere, longitudinale Strecke $l_v$, die den Abstand des Rads 8 von dem Schwerpunkt 25 in longitudinaler Raumrichtung beschreibt, zu berücksichtigen. Für das Rad 10 hinten links sind eine hintere, transversale Strecke $t_h$, die den Abstand des Rads 10 von dem Schwerpunkt 25 in transversaler Raumrichtung beschreibt, und eine hintere, longitudinale Strecke $l_h$, die den Abstand des Rads 10 von dem Schwerpunkt 25 in longitudinaler Raumrichtung beschreibt, zu berücksichtigen.

Ein weiterer vertikal orientierter Abstand $dz_{a,VR}$ bezieht sich auf eine Distanz zwischen einem hier nicht gezeigten Rad vorne rechts und dem Aufbau 6. Ein zusätzlicher Abstand $dz_{a,HR}$ in vertikaler Richtung bezieht sich auf eine Distanz zwischen einem hier nicht gezeigten Rad hinten rechts und dem Aufbau 6. Die beschriebenen Abstände $dz_{a,VL}$, $dz_{a,HL}$, $dz_{a,VR}$, $dz_{a,HR}$ bzw. Distanzen zwischen den Rädern 8, 10 und dem Aufbau 6 sind in Ausgestaltung auf die horizontale Ebene bezogen, in der der Schwerpunkt 25 liegt.

Weiterhin sind für das Rad vorne rechts die vordere, transversale Strecke $t_v$, die den Abstand des Rads vorne rechts von dem Schwerpunkt 25 in transversaler Raumrichtung beschreibt, und die vordere, longitudinale Strecke $l_v$, die den Abstand des Rads vorne rechts von dem Schwerpunkt 25 in longitudinaler Raumrichtung beschreibt, zu berücksichtigen. Für das Rad hinten rechts sind die hintere, transversale Strecke $t_h$, die den Abstand dieses Rads von dem Schwerpunkt 25 in transversaler Raumrichtung beschreibt, und die hintere, longitudinale Strecke $l_h$, die den Abstand des Rads hinten rechts von dem Schwerpunkt 25 in longitudinaler Raumrichtung beschreibt, zu berücksichtigen, wobei in Figur 1 die für das Rad hinten rechts zu berücksichtigende, hintere transversale Strecke nicht eingezeichnet ist.

Ein zweites, fahrwerkfestes Koordinatensystem 26 ist der Fahrbahn 4 zugeordnet und umfasst eine erste Achse in Raumrichtung $x_s$ parallel zu einer vorgesehenen Fahrtrichtung bzw. Längsrichtung der Fahrbahn 4, eine zweite Achse in Raumrichtung $y_s$, die parallel zu einer Querrichtung der Fahrbahn 4 orientiert ist, und eine dritte Achse in Raumrichtung $z_s$, wobei alle genannten Achsen zueinander senkrecht orientiert sind. Eine Neigung und somit eine Lage der Fahrbahn 4 ist hier anhand eines Querwinkels bzw. Wankwinkels $\phi_s$, der eine Neigung der Fahrbahn 4 in Querrichtung beschreibt, und anhand eines Längswinkels bzw. Nickwinkels $\theta_s$, der eine Neigung der Fahrbahn 4 in Längsrichtung und somit bspw. eine Steigung oder eine Gefälle beschreibt, zu beschreiben.

Ein drittes Koordinatensystem 28 ist als Referenz-Koordinatensystem ausgebildet und umfasst eine erste Achse in Raumrichtung $x_{ref}$, eine zweite Achse in Raumrichtung $y_{ref}$ und eine dritte Achse in Raumrichtung $z_{ref}$, die alle zueinander senkrecht orientiert sind.

Außerdem sind dem ersten Koordinatensystem 24 ein Wankwinkel $\phi_a$, der eine Drehung des Aufbaus 6 um die erste, in Raumrichtung $x_a$ orientierte Achse beschreibt, ein Nickwinkel $\theta_a$, der eine Drehung des Aufbaus 6 um die zweite, in Raumrichtung $y_a$ orientierte Achse beschreibt, und ein Gierwinkel $\psi_a$, der eine Drehung des Aufbaus 6 um die dritte, in Raumrichtung $z_a$ orientierte Achse beschreibt, gezeigt.

Das erste, aufbaufeste Koordinatensystem 24 [$x_a$, $y_a$, $z_a$] im Schwerpunkt 25 des Aufbaus 6 des Fahrzeugs 2 folgt translatorischen und rotatorischen Bewegungen des Aufbaus 6. Das dritte, inertiale Koordinatensystem 28 [$x_{ref}$, $y_{ref}$, $z_{ref}$] wird als Referenz-Koordinatensystem herangezogen, wobei berücksichtigt wird, dass die Gravitationsbeschleunigung g ausschließlich in Raumrichtung $z_{ref}$ parallel zu einem Gravitationsvektor wirkt.

In der Ausführungsform des Verfahrens werden zur Schätzung einer Neigung bzw. Lage des Aufbaus 6 der Nickwinkel $\theta_a$ und der Wankwinkel $\phi_a$ auf das dritte, als Referenz-Koordinatensystem ausgebildete Koordinatensystem 28 bezogen.

Die zwischen dem aufbaufesten Koordinatensystem 24 und dem Referenzsystem bzw. inertialen Koordinatensystemen 28 eingeschlossenen Winkel [$\theta_a$, $\phi_a$, $\psi_a$] werden auch als inertialer Nickwinkel $\theta_a$, inertialer Wankwinkel $\phi_a$ und inertialer Gierwinkel $\psi_a$ bezeichnet. Als Neigung des Aufbaus 6 wird dessen Orientierung in Nickrichtung und Wankrichtung bezeichnet, woraus der Nickwinkel $\theta_a$ und der Wankwinkel $\phi_a$ bestimmt werden.

Um die Neigung bzw. Lage des Aufbaus 6 zu schätzen, werden die Beschleunigung $\vec{a} = [\ddot{x}_a, \ddot{y}_a, \ddot{z}_a]^T$ des Aufbaus 6 bzw. des Fahrzeugs 2 entlang der Raumrichtungen $x_a$, $y_a$, $z_a$ und die Drehraten $\vec{\omega} = [\dot{\psi}_a, \dot{\phi}_a, \dot{\Theta}_a]^T$ mit der Sensoranordnung zum Bestimmen der Trägheit mit sechs Freiheitsgraden (IMU- Inertial Measurement Unit) gemessen und somit ermittelt, wobei die Sensoranordnung auch unabhängig von der . Durchführung des Verfahrens in dem Fahrzeug 2 eingesetzt werden kann.

Zur Schätzung der Neigung des Aufbaus 6 ist zunächst zu berücksichtigen, welchen physikalischen Randbedingungen die von der Sensoranordnung bspw. durch Messen zu ermittelnden Größen $\vec{a}$ und $\vec{\omega}$ ausgesetzt sind. Aus Messsignalen von Beschleunigungssensoren der Sensoranordnung werden drei unterschiedliche physikalische Größen abgeleitet:

- die von den Drehraten $\vec{\omega}$ und der ebenen Geschwindigkeit $\overrightarrow{v_{Ebene}} = [v_{Ebene,x}, v_{Ebene,y}, v_{Ebene,z}]^T$ des Fahrzeugs 2 abhängige Zentrifugalbeschleunigung $\overrightarrow{a_{zf}}$:

$$\overrightarrow{a_{zf}} = \vec{\omega} \times \overrightarrow{v_{Ebene}} \qquad (3)$$

- die Änderung der bereinigten, ebenen Geschwindigkeit $\overrightarrow{v_{Ebene}}$ und somit Beschleunigung $\overrightarrow{a_{vp}}$ des Fahrzeugs 2 und/oder des Aufbaus 6 in Raumrichtung einer Achse eines jeweiligen Beschleunigungssensors in der horizontalen Ebene des Fahrzeugs:

$$\overrightarrow{a_{vp}} = R \, \overrightarrow{\dot{v}_{Ebene}} \qquad (4)$$

- die Gravitationsbeschleunigung

$$\overrightarrow{a_{gv}} = R \, [0, 0, -g]^T \qquad (5)$$

In obigen Formeln ist $\overrightarrow{v_{Ebene}}$ die Geschwindigkeit des Fahrzeugs 2 in der horizontalen Ebene und R die Eulersche Drehmatrix (6), die unter Berücksichtigung der Eulerschen Winkel in einer Drehreihenfolge des Wankwinkels $\phi$, des Nickwinkels $\theta$ und des Gierwinkels $\psi$ berechnet wird. Hierbei ist $v_{Ebene,x}$ die übliche Geschwindigkeit des Fahrzeugs $v_{Fzg}$ in Längs- bzw. Fahrtrichtung des Fahrzeugs 2, die über eine Drehzahl der Räder 8, 10 gemessen und dem Tachometer angezeigt wird.

$$R = \begin{pmatrix} \cos\theta\cos\psi & \cos\theta\sin\psi & -\sin\theta \\ \sin\phi\sin\theta\cos\psi - \cos\phi\sin\psi & \sin\phi\sin\theta\sin\psi + \cos\phi\cos\psi & \sin\phi\cos\theta \\ \cos\phi\sin\theta\cos\psi + \sin\phi\sin\psi & \cos\phi\sin\theta\cos\psi - \sin\phi\cos\psi & \cos\phi\cos\theta \end{pmatrix} \quad (6)$$

Die jeweils zu bestimmenden Winkel $\phi$, d. h. $\phi_a$ (für den Aufbau), $\phi_f$ (für das Fahrwerk) bzw. $\phi_s$ (für die Fahrbahn), und $\theta$, d. h. $\theta_a$ (für den Aufbau), $\theta_f$ (für das Fahrwerk) bzw. $\theta_s$ (für die Fahrbahn), können üblicherweise über zwei unterschiedliche Berechnungsmethoden bzw. Herangehensweisen zur Berechnung ermittelt werden:

- durch zeitliche Integration der durch die Sensoranordnung gemessenen Drehraten $\vec{\omega}$, oder

- durch Eliminierung der Zentrifugalbeschleunigung $\vec{a_{zf}}$ und der Änderung der ebenen Geschwindigkeit $\vec{v_{Ebene}}$ und somit der Beschleunigung $\vec{a_{vp}}$ des Fahrzeugs 2 aus den durch die Sensoranordnung gemessenen Beschleunigungen

$\vec{a_{gv}}$ = $\vec{a}$ - $\vec{a_{zf}}$ - $\vec{a_{vp}}$ und Berechnung der Winkel über trigonometrische Funktionen

$$\theta_a = \text{atan}\ \frac{a_{gv,x}}{a_{gv,z}},$$

$$\phi_a = \text{atan}\ \frac{a_{gv,y}}{a_{gv,z}}.$$

Wie bereits anhand von Gleichung (5) angedeutet, ist $\vec{a_{gv}}$ ein Vektor mit den drei Elementen $[a_{gv,x}, a_{gv,y}, a_{gv,z}]^T = [g*\sin\theta, -g*\sin\phi*\cos\theta, -g*\cos\phi*\cos\theta]^T$, wohingegen die Erdbeschleunigung g = 9, 81 m/s$^2$ hier als ein Skalar verwendet wird, das sich je nach Neigung des Aufbaus 6, die mit der Eulerschen Drehmatrix R (6) beschrieben wird, auf unterschiedliche Elemente des Vektors $\vec{a_{gv}}$ auswirkt. Ist der Aufbau 6 nicht geneigt, so ist $\vec{a_{gv}}$ = $[0,0, -g]^T$. Bei einem Wankwinkel $\phi_a$ = 90° und einem Nickwinkel $\theta_a$ = 0° ist $\vec{a_{gv}}$ = $[0, -g, 0]^T$. Ist $\vec{a_{gv}}$ bekannt, können der Nickwinkel $\theta_a$ und der Wankwinkel $\phi_a$ über die oben beschriebenen atan-Funktionen berechnet werden.

Allerdings ist bei den durchzuführenden Berechnungen zu berücksichtigen, dass aufgrund von zeitlich variablen Offset-Fehlern von Drehratensensoren eine Integration der Drehraten ggf. stationär ungenau ist. Dies bedeutet, dass berechnete Winkel niederfrequent driften und nur hochfrequente Anteile von Messsignalen nutzbar sind. Bei den über Beschleunigungssensoren ermittelten Winkeln ist dagegen mit hochfrequenten Störungen zu rechnen, da schwer zu erfassende Änderungen der Geschwindigkeit, die bspw. bei der Überfahrt von Schlaglöchern auftreten, nicht aus den Messsignalen eliminiert werden können.

In der hier beschriebenen Ausführungsform wird als Filteralgorithmus ein auf Quaternionen basierender Neigungsfilter bzw. Lagefilter verwendet. Ebenso ist es möglich, einen Kalman-Filter für die Fusion beider Berechnungsmethoden einzusetzen. Hierdurch werden beide voranstehenden genannten Berechnungsmethoden vereint, wodurch ein Signal bereitgestellt wird, das sowohl niederfrequent als auch hochfrequent nutzbar ist.

Ein Quaternion ist ein vierdimensionaler Vektor $\vec{q}$ = $[q_1,q_2,q_3,q_4]^T$, über den die Orientierung eines starren Körpers, hier des Aufbaus 6, zu beschreiben ist. Ist ein starrer Körper bezogen auf ein Referenzsystem um den Winkel $\chi$ und die Achse $\vec{r}$ = $[r_x,r_y,r_z]^T$ gedreht, wobei $\vec{r}$ ein Einheitsvektor ist, so wird diese Orientierung bezogen auf das Referenzsystem durch das Quaternion

$$\vec{q} = \left[\cos\frac{\chi}{2}, -r_x\sin\frac{\chi}{2}, -r_y\sin\frac{\chi}{2}, -r_z\sin\frac{\chi}{2}\right]^T$$

beschrieben.

Dies wird zunächst für die zeitliche Integration der durch die Sensoranordnung gemessenen Drehraten $\vec{\omega}$ genutzt, wobei der Aufbau 6 bezogen auf das inertiale Referenzsystem im vorliegenden Fall mit der Drehrate $\vec{\omega}$ = $[\omega_x,\omega_y,\omega_z]^T$ rotiert. Ausgehend von einer Ausgangslage $\vec{q_L}$ des Aufbaus 6 wird die Änderung der Lage bzw. Neigung aufgrund der Drehraten durch die Gleichung (7):

$$\vec{\dot{q}_\omega} = \frac{1}{2}\vec{q_L}\otimes[0, \omega_x, \omega_y, \omega_z] \tag{7}$$

beschrieben. Der Operator $\otimes$ symbolisiert hier eine Quaternionenmultiplikation. In einem zeitdiskreten Fall ist eine resultierende Differentialgleichung bspw. durch eine Euler-Integration (8):

$$\vec{q_{\omega,k}} = \vec{q_{L,k-1}} + \vec{\dot{q}_\omega}\Delta t \tag{8}$$

zu lösen, wobei $\Delta t$ einer Schrittweite zwischen zwei Zeitpunkten k und k- 1 entspricht.

Um eine Orientierung des Aufbaus 6 aus der durch die Sensoranordnung gemessenen Beschleunigung $\vec{a}$ und resultierenden, bereinigten Gravitationsbeschleunigung $\vec{a_{gv}}$ = $[a_{gv,x},a_{gv,y},a_{gvz}]^T$ = $[g * \sin\theta, -g * \sin\phi * \cos\theta, -g * \cos\phi *$

cos θ]$^T$ mit Quaternionen zu beschreiben, ist nachfolgendes Optimierungsproblem (9):

$$\vec{q_a} = \min_{q_L \in \Re^4} \vec{f(\vec{q_L}, \vec{a_{gv}})} \quad \text{mit } \vec{f(\vec{q_L}, \vec{a_{gv}})} = \begin{bmatrix} 2(q_{L,2}q_{a,4} - q_{L,1}q_{L,3}) - a_{gv,x} \\ 2(q_{L,1}q_{L,2} + q_{L,3}q_{L,4}) - a_{gv,y} \\ 2(0{,}5 - q_{L,2}^2 - q_{L,3}^2) - a_{gv,z} \end{bmatrix} \quad (9)$$

zu lösen. Eine direkte Berechnung der Neigung ist nicht möglich, da um eine Rotationsachse, die parallel zum Gravitationsvektor orientiert ist, unendlich viele Lösungen existieren. Zur zeitdiskreten Lösung des Optimierungsproblems kommt ein gradientenbasierter Ansatz (10):

$$\vec{q_{a,k}} = \vec{q_{L,k-1}} - \mu \frac{\vec{\nabla f(\vec{q_{L,k-1}}, \vec{a_{gv}})}}{\left\| \vec{\nabla f(\vec{q_{L,k-1}}, \vec{a_{gv}})} \right\|} \qquad (10)$$

mit einer einstellbaren Schrittweite µ zur Anwendung.

Um Informationen über die Neigung, die aus den gemessenen Drehraten $\vec{q_{\omega,k}}$ und aus den Beschleunigungen $\vec{q_{a,k}}$ resultiert, zu fusionieren, werden die beiden Quaternionen $\vec{q_{a,k}}$, $\vec{q_{L,k}}$ über Gleichung (11) gewichtet addiert:

$$\vec{q_{L,k}} = \gamma \vec{q_{a,k}} + (1 - \gamma)\vec{q_{\omega,k}} \qquad (11)$$

wobei $0 \leq \gamma \leq 1$ ein einstellbarer Parameter ist. Die Nickwinkel und Wankwinkel werden dann mit den Gleichungen (12a), (12b):

$$\theta_{a,k} = -\sin^{-1}(2q_{L,k,2}q_{L,k,4} + q_{L,k,1}q_{L,k,3}) \qquad (12a)$$

$$\phi_{a,k} = \text{atan}\left(\frac{2q_{L,k,3}q_{L,k,4} - 2q_{L,k,1}q_{L,k,2}}{2q_{L,k,1}^2 + 2q_{L,k,4}^2 - 1}\right) \qquad (12b)$$

berechnet.

Zur Eliminierung der Zentrifugalbeschleunigung $\vec{a_{zf}}$ und der Änderung $\vec{a_{vp}}$ der ebenen Geschwindigkeit $\vec{v_{Ebene}}$ aus den durch die Sensoranordnung gemessenen Beschleunigungen sind die Nick- und Wankwinkel zu berücksichtigen, die wiederum mit Hilfe des Gravitationsbeschleunigungsvektors $\vec{a_{gv}}$ berechnet werden.

Zur Durchführung der Ausführungsform des Verfahrens wird ein sogenannter Strapdown-Ansatz verwendet, der in dem Diagramm aus Figur 2 dargestellt ist. Einzelne Schritte 40, 42, 44, 46, 48 des Verfahrens werden nachfolgend näher beschrieben.

Zu Beginn des Verfahrens werden sensorisch ermittelte Werte der Beschleunigung $\vec{a}$ und der Drehrate $\vec{\omega}$ bereitgestellt. Mit diesen Werten wird in einem ersten Schritt 40 eine "Korrektur der Zentrifugalkraft" durchgeführt, wobei die durch die Sensoranordnung gemessenen Beschleunigungen um den Anteil der Zentrifugalkraft $\vec{a_{zf}} = \vec{\omega} \times \vec{v_{Ebene}}$ korrigiert werden. Dabei wird eine erste korrigierte Beschleunigung $\vec{a} - \vec{a_{zf}}$ bestimmt. Diese erste korrigierte Beschleunigung $\vec{a} - \vec{a_{zf}}$ wird unter Berücksichtigung von Werten für den Wankwinkel $\phi_a$ und den Nickwinkel $\theta_a$ in einem zweiten Schritt 42 unter Durchführung einer "Korrektur der Gravitationskraft" mit der Gravitationsbeschleunigung $\vec{a_{gv}}$ korrigiert, woraus die Beschleunigung $\vec{a_{vp}}$ in der horizontalen Ebene resultiert.

Im Rahmen des Verfahrens sind zwei Möglichkeiten, die ebene Geschwindigkeit $\vec{v_{Ebene}}$ zu berechnen, vorgesehen.

Eine "Bestimmung der Geschwindigkeiten" wird in einem dritten Schritt 44 unter Berücksichtigung der Beschleunigung $\vec{a_{vp}}$ des Fahrzeugs 2, der gemessenen Geschwindigkeit v des Fahrzeugs 2 und dessen Lenkwinkel $\delta_{lenk}$ durchgeführt, wobei die erste ebene Geschwindigkeit des Fahrzeugs $\vec{v_{Int}} = [v_{Int,x}, v_{Int,y}, v_{Int,z}]^T$ durch Integration (13):

$$\overrightarrow{v_{Int}} = \int \overrightarrow{a_{vp}} dt \qquad\qquad (13)$$

der Beschleunigung $\overrightarrow{a_{vp}}$ des Fahrzeugs 2 berechnet und somit ermittelt wird. Diese ebene Geschwindigkeit $\overrightarrow{v_{Int}}$ wird wiederum in einem geschlossenen Regelkreis zur "Korrektur der Zentrifugalkraft" im ersten Schritt 40 verwendet.

Für die Geschwindigkeit $v_{Ebene,x}$ in Raumrichtung einer Längsachse des Fahrzeugs 2 steht hierbei die über die Raddrehzahlen gemessene Geschwindigkeit $v_{Fzg}$ in Richtung $x_a$ des Fahrzeugs 2 zur Verfügung. Unter Zuhilfenahme eines Einspurmodells ist es weiterhin möglich, aus dem Lenkwinkel $\delta_{lenk}$ und der gemessenen Geschwindigkeit $v_{Fzg}$ eine zur Querachse des Kraftfahrzeugs wirksame Geschwindigkeit $v_{y,ESM}$ zu berechnen. Für die vertikale Geschwindigkeit $v_{Ebene,z}$ steht keine weitere Mess- bzw. Berechnungsmethode zur Verfügung. Die alternativ ermittelte zweite ebene Geschwindigkeit des Fahrzeugs (14):

$$\overrightarrow{v_{alt}} = \left[v_{Fzg}, v_{y,ESM}, 0\right]^T \qquad\qquad (14)$$

und die durch Integration (13) berechnete Geschwindigkeit $\overrightarrow{v_{Int}}$ können durch einen geeigneten Filteralgorithmus, wie bspw. durch ein Kalman-Filter (15), über eine Berechnungsvorschrift, die einen Gewichtungsfaktor $\tau$ umfasst:

$$\overrightarrow{v_{Ebene}} = \tau\overrightarrow{v_{Int}} + (1-\tau)\overrightarrow{v_{alt}} \quad \text{mit } 0 \leq \tau \leq 1 \qquad\qquad (15)$$

fusioniert werden.

In einem vierten Schritt 46 zur "Korrektur der ebenen Geschwindigkeitsänderung" werden Werte der gemessenen Geschwindigkeit $v_{Fzg}$, des Lenkwinkels $\delta_{lenk}$, der Winkel $\theta_a$, $\phi_a$ und die durch die Zentrifugalbeschleunigung $\overrightarrow{a_{zf}}$ korrigierte Beschleunigung $\overrightarrow{a} - \overrightarrow{a_{zf}}$ berücksichtigt, wobei die korrigierte Beschleunigung durch den Anteil der Änderung

$$\overrightarrow{a_{vp,alt}} = R\,\overrightarrow{v_{alt}}$$

der ebenen Geschwindigkeit korrigiert wird. Um eine negative Rückkopplung zu vermeiden, wird die Ableitung eines Vektors der Geschwindigkeit $\overrightarrow{v_{alt}}$ statt der laut der Berechnungsvorschrift (15) ermittelten Geschwindigkeit $\overrightarrow{v_{Ebene}}$ verwendet.

In einem fünften Schritt 48 werden unter Berücksichtigung der Drehrate $\overrightarrow{\omega}$ und der Gravitationsbeschleunigung $\overrightarrow{a_{gv}}$ des Fahrzeugs 2 der Nickwinkel $\theta_a$ sowie der Wankwinkel $\phi_a$ und somit die Neigung bzw. Lage des Aufbaus 6 des Fahrzeugs 2 mit dem voranstehend beschriebenen, auf Quaternionen basierenden Neigungsfilter berechnet. Über die voranstehend beschriebene Vorgehensweise werden der Nickwinkel $\theta_a$ und der Wankwinkel $\phi_a$ bezogen auf das inertiale Koordinatensystem 28 bestimmt und in einem geschlossenen Regelkreis zur "Korrektur der Gravitationskraft" im zweiten Schritt 42 sowie zur "Korrektur der eben Geschwindigkeitsänderung" im dritten Schritt 44 verwendet.

Ausgehend von der im fünften Schritt 48 ermittelten Neigung des Aufbaus 6 wird die Neigung und somit die Lage der Fahrbahn 4 ermittelt, wobei die Abstände $\overrightarrow{dz_a}$ = $[d_{za,VL}, dz_{a,VR}, dz_{a,HL}, dz_{a,HR}]^T$ zwischen den Rädern 8, 10 und dem Aufbau 6 als gemessene Größen hinzugezogen werden, wodurch zunächst der Nickwinkel $\theta_f$ und der Wankwinkel $\phi_f$ des Fahrwerks des Fahrzeugs 2 berechnet werden, wobei eine durchzuführende Berechnung von einer Transformationsmatrix (16) abhängig ist:

$$T = \begin{bmatrix} l_v & l_v & -l_h & -l_h \\ t_v & -t_v & t_h & -t_h \end{bmatrix} \qquad\qquad (16)$$

mit der eine geometrische Lage des Schwerpunkts 25 bezogen auf die Positionen der Räder 8, 10 beschrieben wird bzw. ist. Dabei beschreibt die erste Spalte den Abstand des Rads 8 vorne links, die zweite Spalte den Abstand des Rads vorne rechts, die dritte Spalte den Abstand des Rads 10 hinten links und die vierte Spalte den Abstand des Rads hinten rechts zu dem Schwerpunkt 25 innerhalb der horizontalen Ebene.

Die Neigung des Fahrwerks wird dann über den vektoriellen Zusammenhang (17):

$$\begin{bmatrix} \phi_f \\ \theta_f \end{bmatrix} = T \, \overrightarrow{dz_a} \qquad (17)$$

bestimmt.

Durch die Subtraktion der Neigung des Fahrwerks von der Neigung des Aufbaus 6 wird die Neigung der Fahrbahn 4 im Bezug zum aufbaufesten, ersten Koordinatensystem 24 über den vektoriellen Zusammenhang (18):

$$\begin{bmatrix} \phi_s \\ \theta_s \end{bmatrix} = \begin{bmatrix} \phi_a \\ \theta_a \end{bmatrix} - \begin{bmatrix} \phi_f \\ \theta_f \end{bmatrix} \qquad (18)$$

berechnet. Da eine Reifeneinfederung der Räder 8, 10 im Vergleich zu einem zu berücksichtigenden Abstand sehr gering ist, wird diese in obiger Rechnung vernachlässigt.

Da die Winkel $\phi_a$ und $\theta_a$ auf den Vektor bezogene Schätzgrößen für die Neigung des Aufbaus 6 sind und $\phi_f$ und $\theta_f$ die relativen Winkel zwischen dem Aufbau 6 und der Oberfläche der Fahrbahn 4 beschreiben, stehen mit $\phi_s$ und $\theta_s$ ebenfalls Winkel als geschätzte Größen für die Neigung der Fahrbahn 4 bzw. Straße bezogen auf den Gravitationsvektor zur Verfügung.

Bei Umsetzung des Verfahrens ist dem aktiven Fahrwerk des Fahrzeugs 2 durch Korrektur einer Neigung des Aufbaus 6 eine Kompensation der Neigung der Fahrbahn 4 zu erreichen und demnach der Aufbau 6 zu horizontieren bzw. horizontal auszurichten.

Diesbezüglich ist anhand von Soll-Werten für eine Änderung von Längen der Aktoren 12, 14 vorzugeben, in welchem Maß eine derartige Kompensation der Neigung bzw. eine Horizontierung des Aufbaus vorzunehmen ist. So ist durch Anpassen jeweiliger Längen der Aktoren 12, 14 an die Soll-Werte bei einer Steigungs- bzw. Bergauffahrt quantitativ eine stärkere Horizontierung als bei Steigungs- bzw. Bergabfahrt vorzusehen.

Bei einer Steigungsauffahrt wird der Aufbau 6 des Fahrzeugs 2 hinten angehoben und vorne abgesenkt, wodurch eine Sicht der Insassen zu verbessern und ein Komfort zu erhöhen ist. Bei einer Steigungsabfahrt wird der Aufbau 6 vorne angehoben und hinten abgesenkt, allerdings ist hierbei im Vergleich zur Steigungsauffahrt eine deutlich geringere Kompensation der Neigung vorzunehmen, um die Sicht der Insassen nicht zu verschlechtern und einen Bodenfreigang des Aufbaus 6 bei einem Übergang von der Steigungs- bzw. einer Hangabfahrt in die Waagrechte zu gewährleisten.

Ebenso ist denkbar, den Aufbau 6 quer zur Fahrtrichtung des Fahrzeugs 2 zu horizontieren, wobei eine Kompensation der Neigung des Aufbaus 6 in Querrichtung ebenfalls durch Vorgabe von Soll-Werten beschränkt werden kann, um beispielsweise Fahrsituationen zu vermeiden, durch die ein Bodenfreigang eingeschränkt werden könnte.

Zur Umsetzung des Verfahrens werden die errechneten Neigungswinkel der Fahrbahn $\phi_s$ und $\theta_s$ zunächst durch Vorgabe von Soll- bzw. Grenzwerten $\phi_{s,lim}$, $\theta_{s,lim}$ limitiert:

$$\phi_{s,lim} = \begin{cases} \phi_{s,max} & \text{wenn } \phi_s > \phi_{s,max} \\ \phi_{s,min} & \text{wenn } \phi_s < \phi_{s,min} \\ \phi_s & \text{sonst} \end{cases} \qquad (19)$$

$$\theta_{s,lim} = \begin{cases} \theta_{s,max} & \text{wenn } \theta_s > \theta_{s,max} \\ \theta_{s,min} & \text{wenn } \theta_s < \theta_{s,min} \\ \theta_s & \text{sonst} \end{cases} \qquad (20)$$

Danach werden die Neigungswinkel $\phi_s$, $\theta_s$ auf Soll-Werte $\overrightarrow{z_{akt}} = [z_{akt,VL}, z_{akt,VR}, z_{akt,HL}, z_{akt,HR}]^T$ zur Änderung von Längen der Aktoren 12, 14 des aktiven Fahrwerks, umgerechnet. Eine Umrechnung der limitierten Nick- und Wankwinkel der Fahrbahn 4 auf die Soll-Werte für Längen der Aktoren 12, 14 wird unter Zuhilfenahme der Transformationsmatrix T und von bekannten Übersetzungsverhältnissen zwischen aktorbezogenen und radbezogenen Abständen

$$i_{VA} = \frac{z_{akt,VL}}{dz_{a,VL}} = \frac{z_{akt,VR}}{dz_{a,VR}} \quad \text{und} \quad i_{HA} = \frac{z_{akt,HL}}{dz_{a,HL}} = \frac{z_{akt,HR}}{dz_{a,HR}} \quad \text{für die Vorderachse und die Hinterachse des Fahrzeugs}$$

2 durchgeführt, woraus eine Diagonalmatrix diag($i_{VA}$, $iV_A$, $i_{HA}$, $i_{HA}$) gebildet wird. Hierbei wird für die aktorbezogenen Soll-Werte der nachfolgende Zusammenhang mit der transponierten Transformationsmatrix (16) verwendet:

$$\vec{z_{akt}} = \text{diag}(i_{VA}, i_{VA}, i_{HA}, i_{HA})\mathrm{T}^{\mathrm{T}}\begin{bmatrix}\phi_{s,lim}\\\theta_{s,lim}\end{bmatrix} \qquad (21)$$

In obigen Formeln sind die Maximal- bzw. Minimalwinkel $\phi_{s,max}$, $\theta_{s,max}$, $\phi_{s,min}$ und $\theta_{s,min}$ einstellbare Abstimmparameter bzw. Soll-Werte, die abhängig von einer jeweiligen Fahrsituation verändert werden können.

In einem Anwendungsbeispiel werden nachfolgende Ausgangswerte vorgegeben:

$$i_{VA} = i_{HA} = 1; t_v = t_h = 0,5; l_v = l_h = 1,5 \qquad (22)$$

$$\phi_{s,lim} = \frac{1}{180}\pi; \ \theta_{s,lim} = 0 \qquad (23)$$

Daraus resultiert:

$$\vec{z_{akt}} = [0{,}026 \quad 0{,}026 \quad -0{,}026 \quad -0{,}026]^{\mathrm{T}} \qquad (24)$$

Dies bedeutet, dass die vorderen Aktoren 12 um 2,6 cm nach oben und die hinteren Aktoren 14 um 2,6 cm nach unten bewegt werden, wobei Längen der jeweiligen Aktoren 12, 14 gemäß der hier angegebenen Strecken verändert werden.

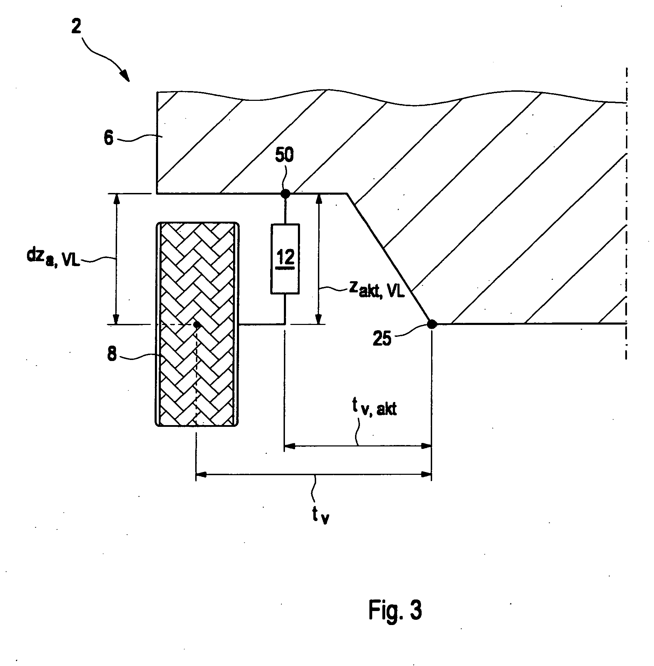

Figur 3 zeigt in schematischer Darstellung ein Detail des Kraftfahrzeugs 2 im Bereich des vorne links angeordneten Rads 8, das hier über den diesem Rad 8 zugeordneten Aktor 12 mit einem Aufhängepunkt 50 des Aufbaus 6 des Fahrzeugs 2 verbunden ist. Außerdem zeigt Figur 3 den transversalen Abstand $t_v$ des Rads 8 zu dem Schwerpunkt 25. Ebenfalls ist hier ein transversaler Abstand $t_{v,akt}$ des Aktors 12 zu dem Schwerpunkt 25 durch einen Doppelpfeil angedeutet. Ein Abstand $dz_{a,VL}$ des Rads 8 zu dem Aufbau 6 sowie ein Abstand $z_{akt,VL}$ des Aktors 12 zu dem Aufhängepunkt 50 des Aufbaus 6 sind hier ebenfalls dargestellt.

Entsprechend ist für das Rad 10 hinten links dessen Abstand $dz_{a,HL}$ zu dem Aufbau sowie dessen Abstand $t_h$ zu dem Schwerpunkt 25 zu berücksichtigen. Für den Aktor 14, der dem Rad 10 hinten links zugeordnet ist, sind entsprechend ein Abstand $z_{akt,HL}$ zu einem Aufhängepunkt des Aufbaus 6 sowie $t_{h,akt}$ zu dem Schwerpunkt 25 zu berücksichtigen.

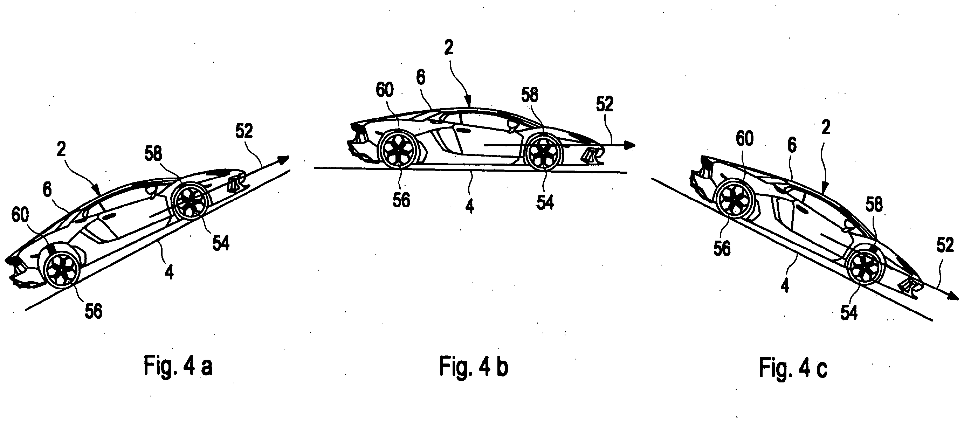

Das Fahrzeug 2 ist in Figur 4a bei einer Steigungsauffahrt auf der Fahrbahn 4, in Figur 4b in einer waagrechten Ebene der Fahrbahn 4 und in Figur 4c bei einer Steigungsabfahrt schematisch dargestellt, wobei in allen drei Figuren 4a, 4b, 4c durch einen Pfeil 52 eine nach vorwärts orientierte Fahrtrichtung des Fahrzeugs 2 angedeutet ist. Außerdem sind in den Figuren 4a, 4b und 4c ein Rad 54 des Fahrzeugs 2 vorne rechts und ein Rad 56 des Fahrzeugs 2 hinten rechts dargestellt. Hier ist vorgesehen, dass das Rad 54 vorne rechts über einen Aktor 58 mit einem Aufhängepunkt des Aufbaus 6 des Fahrzeugs 2 verbunden ist, wohingegen das Rad 56 hinten rechts über einen Aktor 60 mit einem Aufhängepunkt des Aufbaus 6 verbunden ist.

In Anlehnung an die Darstellung aus Figur 1 und/oder Figur 3 weist das Rad 54 vorne rechts zu dem Aufbau 6 den Abstand $dz_{a,VR}$ und zu dem Schwerpunkt 25 den Abstand $t_v$ auf. Der dem Rad 54 vorne rechts zugeordnete Aktor 58 weist einen Abstand $z_{akt,VR}$ zu dem Aufbau 6 und einen Abstand $t_{v,akt}$ zu dem Schwerpunkt 25 des Aufbaus auf. Entsprechend weist das Rad 56 hinten rechts zu einem Aufhängepunkt des Aufbaus 6 den Abstand $dz_{a,HR}$ und zu dem Schwerpunkt 25 den Abstand $t_h$ auf. Der dem Rad 56 hinten rechts zugeordnete Aktor 60 weist einen Abstand $z_{akt,HR}$ zu einem Aufhängepunkt des Aufbaus 6 und einen Abstand $t_{h,akt}$ zu dem Schwerpunkt 25 des Aufbaus 6 auf.

Unter Berücksichtigung der voranstehend beschriebenen Schritte des erfindungsgemäßen Verfahrens werden die Aktoren 14, 60, die die hinteren Räder 10, 56 an der Hinterachse des Fahrzeugs 2 mit dessen Aufbau 6 verbinden, bei der Steigungsauffahrt (Figur 4a) im Vergleich zu den beiden Aktoren 12, 58, die die vorderen Räder 8, 54 an der Vorderachse des Fahrzeugs 2 mit dessen Aufbau 6 verbinden, um eine größere Strecke verlängert. Bei der Fahrt auf der waagrecht orientierten Fahrbahn (Figur 4b) werden die Längen der Aktoren 12, 14, 58, 60 gleich eingestellt. Bei der anhand von Figur 4c angedeuteten Steigungsabfahrt werden die Aktoren 12, 58, die die beiden vorderen Räder 8, 54 mit dem Aufbau 6 des Fahrzeugs 2 verbinden, um eine größere Strecke als die Aktoren 14, 60, die die Räder 10, 56 der Hinterachse des Fahrzeugs 2 mit dessen Aufbau 6 verbinden, verlängert. Allerdings ist die Verlängerung der Aktoren 12, 58 an der Vorderachse gegenüber den Aktoren 14, 60 an der Hinterachse bei der Steigungsabfahrt geringer als die Verlängerung der Aktoren 14, 60 gegenüber den Aktoren 12, 58 bei der Steigungsauffahrt.

**Patentansprüche**

1. Verfahren zum Kompensieren einer Neigung eines Fahrzeugs (2) in zumindest einer Raumrichtung,

   - wobei das Fahrzeug (2) einen Aufbau (6) und ein aktives Fahrwerk mit mehreren Rädern (8, 10, 54, 56) aufweist, die sich mit der Fahrbahn (4) in Kontakt befinden,
   - wobei jedes Rad (8, 10, 54, 56) über einen in seiner Länge verstellbaren Aktor (12, 14, 58, 60) an einem dem Rad (8, 10) zugeordneten Aufhängepunkt (50) mit dem Aufbau (6) verbunden ist,
   - wobei eine Neigung des Aufbaus (6) in die zumindest eine Raumrichtung ermittelt wird, wobei für mindestens zwei Räder (8, 10, 54, 56) je ein vertikaler Abstand zu dem dem jeweiligen Rad (8, 10, 54, 56) zugeordneten Aufhängepunkt (50) des Aufbaus (6) erfasst wird,
   - wobei über die mindestens zwei ermittelten Abstände eine Neigung des Fahrwerks in die zumindest eine Raumrichtung durch Transformation des vertikalen Abstands der mindestens zwei Räder (8, 10, 54, 56) zu dem Aufbau (6) mit einer Transformationsmatrix

$$T = \begin{bmatrix} l_v & l_v & -l_h & -l_h \\ t_v & -t_v & t_h & -t_h \end{bmatrix}$$

   berechnet wird,
   - wobei die Neigung der Fahrbahn (4) in die zumindest eine Raumrichtung aus einer Differenz der Neigung des Aufbaus (6) in die zumindest eine Raumrichtung und der Neigung des Fahrwerks in die zumindest eine Raumrichtung ermittelt wird,
   - wobei jeweils ein Wert für mindestens einen Winkel $\phi_s$, $\theta_s$, um den die Fahrbahn (4) in die zumindest eine Raumrichtung geneigt ist, ermittelt wird,
   - wobei jeweils ein Grenzwert $\phi_{s,lim}$, $\theta_{s,lim}$ für den Wert des mindestens einen Winkels $\phi_s$, $\theta_s$ vorgegeben wird,
   - wobei Übersetzungsverhältnisse $i_{VA}$, $i_{HA}$ für einen Abstand des mindestens einen Aktors (12, 14, 58, 60) bezogen auf den Aufbau (6) und für einen Abstand des mindestens einen Rads (8, 10, 54, 56) bezogen auf den Aufbau (6) berücksichtigt werden,
   - wobei ein Soll-Wert für eine Änderung der Länge des mindestens einen Aktors (12, 14, 58, 60) durch:

$$\overrightarrow{z_{akt}} = \mathrm{diag}(i_{VA}, i_{VA}, i_{HA}, i_{HA}) T^T \begin{bmatrix} \phi_{s,lim} \\ \theta_{s,lim} \end{bmatrix}$$

   bestimmt wird.

2. Verfahren nach Anspruch 1, bei dem die Neigung des Fahrwerks in die mindestens eine Raumrichtung durch Transformation der vertikalen Abstände der mindestens zwei Räder (8, 10, 54, 56) zu einem Schwerpunkt (25) des Aufbaus (6) mit der Transformationsmatrix

$$T = \begin{bmatrix} l_v & l_v & -l_h & -l_h \\ t_v & -t_v & t_h & -t_h \end{bmatrix}$$

ermittelt wird, wobei eine vordere, longitudinale Strecke $l_v$ einen Abstand eines jeweiligen vorderen Rads (8, 56) von einem Schwerpunkt (25) des Aufbaus (6) in longitudinaler Raumrichtung, eine hintere, longitudinale Strecke $l_h$ den Abstand eines jeweiligen hinteren Rads (10, 56) von dem Schwerpunkt (25) in longitudinaler Raumrichtung, eine vordere, transversale Strecke $t_v$ den Abstand des vorderen Rads (8, 54) von dem Schwerpunkt (25) in transversaler Raumrichtung und eine hintere, transversale Strecke $t_h$ den Abstand des hinteren Rads (10, 56) von dem Schwerpunkt (25) in transversaler Raumrichtung beschreibt.

3. Verfahren nach Anspruch 2, bei dem die Übersetzungsverhältnisse $i_{VA}$, $i_{HA}$ über einen Abstand jeweils eines Aktors (12, 14, 58, 60) von dem Schwerpunkt (25) des Aufbaus (6) und jeweils eines Rads (8, 10, 54, 56) von dem Schwerpunkt (25) des Aufbaus (6) berechnet werden.

4. Verfahren nach einem der voranstehenden Ansprüche, bei dem bei Vorliegen einer Steigungsauffahrt ein negativer Nickwinkel $\theta_s$ und bei Vorliegen einer Steigungsabfahrt ein positiver Nickwinkel $\theta_s$ ermittelt wird.

5. Verfahren nach einem der voranstehenden Ansprüche, bei dem der jeweilige Grenzwert $\phi_{s,lim}$, $\theta_{s,lim}$ für den Wert des mindestens einen Winkels $\phi_s$, $\theta_s$ durch:

$$\phi_{s,lim} = \begin{cases} \phi_{s,max} & \text{wenn } \phi_s > \phi_{s,max} \\ \phi_{s,min} & \text{wenn } \phi_s < \phi_{s,min} \\ \phi_s & \text{sonst} \end{cases}$$

$$\theta_{s,lim} = \begin{cases} \theta_{s,max} & \text{wenn } \theta_s > \theta_{s,max} \\ \theta_{s,min} & \text{wenn } \theta_s < \theta_{s,min} \\ \theta_s & \text{sonst} \end{cases}$$

vorgegeben wird.

6. Verfahren nach Anspruch 5, bei dem ein Betrag von $\theta_{s,min}$ im Fall der Steigungsauffahrt größer als ein Betrag von $\theta_{s,max}$ im Fall der Steigungsabfahrt gewählt wird.

7. Verfahren nach einem der voranstehenden Ansprüche, bei dem zum Ermitteln der Neigung des Aufbaus (6) ein erstes, aufbaufestes Koordinatensystem (24) und zum Ermitteln der Neigung des Fahrwerks ein zweites fahrwerkfestes Koordinatensystem (26) verwendet wird, und wobei ein drittes, inertiales Koordinatensystem (28) als Referenz-Koordinatensystem verwendet wird, das auf die Gravitationskraft bezogen ist.

8. Verfahren nach Anspruch 7, bei dem die Neigung des Aufbaus (6) bezüglich des Referenz-Koordinatensystems über ein Quaternion beschrieben wird.

9. Verfahren nach einem der voranstehenden Ansprüche, bei dem ein Strapdown-Algorithmus verwendet wird, mit dem vorgesehen ist, dass zum Ermitteln einer korrigierten Beschleunigung des Fahrzeugs (2) eine sensorische gemessene Beschleunigung um eine Zentrifugalbeschleunigung und die Gravitationsbeschleunigung korrigiert wird und daraus eine Geschwindigkeit des Fahrzeugs (2) in einer Ebene bestimmt wird, und dass die Neigung des Aufbaus (6) berechnet wird.

10. System zum Kompensieren einer Neigung eines Fahrzeugs (2) in zumindest einer Raumrichtung,

- wobei das Fahrzeug (2) einen Aufbau (6) und ein aktives Fahrwerk mit mehreren Rädern (8, 10, 54, 56) aufweist, die sich mit der Fahrbahn (4) in Kontakt befinden, wobei das System (16) mehrere Sensoren (19, 20, 22) und ein Kontrollgerät (18) aufweist,
- wobei jedes Rad (8, 10, 54, 56) über einen in seiner Länge verstellbaren Aktor (12, 14, 58, 60) an einem dem Rad (8, 10, 54, 56) zugeordneten Aufhängepunkt (50) mit dem Aufbau (6) verbunden ist,
- wobei mindestens ein erster Sensor (19) dazu ausgebildet ist, eine Neigung des Aufbaus (6) in die zumindest eine Raumrichtung zu ermitteln, wobei mindestens ein zweiter Sensor (20, 22) dazu ausgebildet ist, für mindestens zwei Räder (8, 10, 54, 56) je einen vertikalen Abstand zu dem dem jeweiligen Rad (8, 10, 54, 56) zugeordneten Aufhängepunkt (50) des Aufbaus (6) zu erfassen,
- wobei das Kontrollgerät (18) dazu ausgebildet ist, über mindestens zwei ermittelte Abstände der mindestens zwei Räder (8, 10, 54 56) eine Neigung des Fahrwerks in die zumindest eine Raumrichtung durch Transformation des vertikalen Abstands der mindestens zwei Räder (8, 10, 54, 56) zu dem Aufbau (6) mit einer Transformationsmatrix

$$T = \begin{bmatrix} l_v & l_v & -l_h & -l_h \\ t_v & -t_v & t_h & -t_h \end{bmatrix}$$

zu berechnen,

- wobei das Kontrollgerät (18) dazu ausgebildet ist, die Neigung der Fahrbahn (4) in die zumindest eine Raumrichtung aus einer Differenz der Neigung des Aufbaus (6) in die zumindest eine Raumrichtung und der Neigung des Fahrwerks in die zumindest eine Raumrichtung zu ermitteln, und jeweils einen Wert für mindestens einen Winkel $\phi_s$, $\theta_s$, um den die Fahrbahn (4) in die zumindest eine Raumrichtung geneigt ist, zu ermitteln,
- wobei jeweils ein Grenzwert $\phi_{s,lim}$, $\theta_{s,lim}$ für den Wert des mindestens einen Winkels $\phi_s$, $\theta_s$ vorgegeben ist,
- wobei das Kontrollgerät (18) dazu ausgebildet ist, Übersetzungsverhältnisse $i_{VA}$, $i_{HA}$ für einen Abstand des mindestens einen Aktors (12, 14, 58, 60) bezogen auf den Aufbau und für einen Abstand des mindestens einen Rads (8, 10, 54, 56) bezogen auf den Aufbau zu berücksichtigen,
- wobei das Kontrollgerät (18) dazu ausgebildet ist, einen Soll-Wert für eine Änderung einer Länge des mindestens einen Aktors (12, 14, 58, 60) durch:

$$\overrightarrow{z_{akt}} = \mathrm{diag}(i_{VA}, i_{VA}, i_{HA}, i_{HA})T^T \begin{bmatrix} \phi_{s,lim} \\ \theta_{s,lim} \end{bmatrix}$$

zu bestimmen.

**11.** System nach Anspruch 10, bei dem der mindestens eine zweite Sensor (20, 22) als Abstandssensor ausgebildet ist.

**Claims**

**1.** Method for compensating an inclination of a vehicle (2) in at least one spatial direction,

- wherein the vehicle (2) has a body (6) and an active chassis with several wheels (8, 10, 54, 56) that are in contact with the road (4),
- wherein each wheel (8, 10, 54, 56) is connected with the body (6) via an actuator (12, 14, 58, 60), adjustable in its length, to a suspension point (50) associated to the wheel (8, 10),
- wherein an inclination of the body (6) is determined in the at least one spatial direction, wherein for at least two wheels (8, 10, 54, 56) a vertical distance each to the suspension point (50) of the body (6) associated to the respective wheel (8, 10, 54, 56) is detected,
- wherein over the at least two distances determined, an inclination of the chassis in the at least one spatial direction is calculated by transforming the vertical distance of the at least two wheels (8, 10, 54, 56) to the body (6) with a transformation matrix

$$T = \begin{bmatrix} l_v & l_v & -l_h & -l_h \\ t_v & -t_v & t_h & -t_h \end{bmatrix}$$

- wherein the inclination of the road surface (4) in the at least one spatial direction is determined from a difference between the inclination of the body (6) in the at least one spatial direction and the inclination of the chassis in the at least one spatial direction,
- wherein in each case a value for at least one angle $\phi_s$, $\theta_s$, by which the road surface (4) is inclined in the at least one spatial direction, is determined,
- wherein in each case a limit value $\phi_{s,lim}$, $\theta_{s,lim}$ for the value of the at least one angle $\phi_s, \theta_s$ is specified,
- wherein gear ratios $i_{VA}$, $i_{HA}$ for a distance of the at least one actuator (12, 14, 58, 60) relative to the body (6) and for a distance of the at least one wheel (8, 10, 54, 56) relative to the body (6), is specified,
- wherein a desired value for a change in the length of the at least one actuator (12, 14, 58, 60) is determined by:

$$\overrightarrow{z_{akt}} = \mathrm{diag}(i_{VA}, i_{VA}, i_{HA}, i_{HA})T^T \begin{bmatrix} \phi_{s,lim} \\ \theta_{s,lim} \end{bmatrix}$$

**2.** Method according to claim 1, in which the inclination of the chassis in the at least one spatial direction is determined by the transformation of the vertical distances of the at least two wheels (8, 10, 54, 56) relative to a centre of gravity (25) of the body (6) with the transformation matrix

$$T = \begin{bmatrix} l_v & l_v & -l_h & -l_h \\ t_v & -t_v & t_h & -t_h \end{bmatrix}$$

wherein a front, longitudinal distance $l_v$, describes a distance of a respective front wheel (8, 56) from a centre of gravity (25) of the body (6) in the longitudinal spatial direction, a rear, longitudinal distance $l_h$ describes the distance of a respective rear wheel (10, 56) from the centre of gravity (25) in the longitudinal spatial direction, a front transverse distance $t_v$ describes the distance of the front wheel (8, 54) from the centre of gravity (25) in the transverse spatial direction and a rear, transverse distance $t_h$ describes the distance of the rear wheel (10, 56) from the centre of gravity (25) in transverse spatial direction.

**3.** Method according to claim 2, in which the gear ratios $i_{VA}$, $i_{HA}$ are distributed over a respective distance of an actuator (12, 14, 58, 60) from the centre of gravity (25) of the body (6) and in each case of a wheel (8, 10, 54, 56) from the centre of gravity (25) of the body (6).

**4.** Method according to one of the preceding claims, in which a negative pitch angle $\theta_s$, is determined in the presence of a slope ascent, a positive pitch angle $\theta_s$, is determined in the presence of a slope descent.

**5.** Method according to one of the preceding claims, in which the respective limit value $\phi_{s,lim}$, $\theta_{s,lim}$ for the value of the at least one angle $\phi s$, $\theta s$, is given by

$$\phi_{s,lim} = \begin{cases} \phi_{s,max} \text{ wenn } \phi_s > \phi_{s,max} \\ \phi_{s,min} \text{ wenn } \phi_s < \phi_{s,min} \\ \phi_s \text{ otherwise} \end{cases}$$

$$\theta_{s,lim} = \begin{cases} \theta_{s,max} \text{ wenn } \theta_s > \theta_{s,max} \\ \theta_{s,min} \text{ wenn } \theta_s < \theta_{s,min} \\ \theta_s \text{ otherwise} \end{cases}$$

**6.** Method according to claim 5, in which an amount of $\theta_{s,min}$ in the case of the ascending slope is chosen to be greater than an amount of $\theta_{s,max}$ in the case of the descending slope.

**7.** Method according to one of the preceding claims, wherein to determine the inclination of the body (6), a first body-fixed coordinate system (24) and for determining the inclination of the chassis, a second chassis-fixed coordinate system (26) is used, and wherein a third, inertial coordinate system (28) is used as the reference coordinate system that is based on the gravitational force.

**8.** Method according to claim 7, in which the inclination of the body (6) with respect to the reference coordinate system is described by means of a quaternion.

**9.** Method according to one of the preceding claims, in which a strap-down algorithm is used, which is provided for correcting a sensor-measured acceleration of a centrifugal acceleration and the gravitational acceleration for determining a corrected acceleration of the vehicle (2) and from this a speed of the vehicle (2) is determined in one plane, and that the inclination of the body (6) is calculated.

**10.** System for compensating an inclination of a vehicle (2) in at least one spatial direction,

- wherein the vehicle (2) has a body (6) and an active chassis with several wheels (8, 10, 54, 56) that are in contact with the road surface (4), wherein the system (16) has several sensors (19, 20, 22) and a control device (18),
- wherein each wheel (8, 10, 54, 56) is connected with the body (6) via an actuator (12, 14, 58, 60), adjustable in its length, to a suspension point (50) associated to the wheel (8, 10, 54, 56),

- wherein at least one first sensor (19) is adapted to determine an inclination of the body (6) in the at least one spatial direction, wherein at least one second sensor (20, 22) adapted for at least two wheels (8, 10, 54, 56) each detect a vertical distance to the suspension point (50) of the body (6) associated to the respective wheel (8, 10, 54, 56),
- wherein the control device (18) is adapted at least via at least two distances of the two wheels (8, 10, 54 56) to an inclination of the chassis in the at least one spatial direction by transformation of the vertical distance of the at least two wheels (8, 10, 54, 56) to the body (6) with a transformation matrix

$$T = \begin{bmatrix} l_v & l_v & -l_h & -l_h \\ t_v & -t_v & t_h & -t_h \end{bmatrix}$$

- wherein the control device (18) is formed to determine the inclination of the road surface (4) in the at least one spatial direction from a difference of the inclination of the body (6) in the at least one spatial direction and the inclination of the chassis in the at least one spatial direction z, and in each case to determine a value for at least one angle $\phi_s$, $\theta_s$ by which the road surface (4) is inclined in the at least one spatial direction,
- wherein in each case a limit value $\phi_{s,lim}$, $\theta_{s,lim}$ is given for the value of the at least one angle $\phi_s$, $\theta_s$,
- wherein the control device (18) is formed to account for gear ratios $i_{VA}$, $i_{HA}$ for a distance of the at least one actuator (12, 14, 58, 60) relative to the body and for a distance of the at least one wheel (8, 10, 54, 56) relative to the body,
- wherein the control device (18) is formed to determine a target value for a change in a length of the at least one actuator (12, 14, 58, 60) by applying:

$$\overrightarrow{z_{akt}} = \text{diag}(i_{VA}, i_{VA}, i_{HA}, i_{HA})T^T \begin{bmatrix} \phi_{s,lim} \\ \theta_{s,lim} \end{bmatrix}$$

**11.** The system according to claim 10, in which the at least one second sensor (20, 22) is formed as a displacement sensor.

## Revendications

**1.** Procédé de compensation d'une inclinaison d'un véhicule (2) dans au moins un sens spatial,

- dans lequel le véhicule (2) présente une carrosserie (6) et un châssis actif avec plusieurs roues (8, 10, 54, 56) qui se trouvent en contact avec la chaussée (4),
- dans lequel chaque roue (8, 10, 54, 56) est raccordée à la carrosserie (6) par un actionneur (12, 14, 58, 60) réglable dans sa longueur sur un point de suspension (50) associé à la roue (8, 10),
- dans lequel une inclinaison de la carrosserie (6) dans l'au moins un sens spatial est déterminée, dans lequel une distance verticale du point de suspension (50) de la carrosserie (6) associé à la roue respective (8, 10, 54, 56) est détectée chaque fois pour au moins deux roues (8, 10, 54, 56),
- dans lequel par les au moins deux distances déterminées une inclinaison du châssis dans l'au moins un sens spatial est calculée par transformation de la distance verticale des au moins deux roues (8, 10, 54, 56) de la carrosserie (6) avec une matrice de transformation

$$T = \begin{bmatrix} lv & lv & -lh & -lh \\ tv & -tv & th & -th \end{bmatrix}$$

- dans lequel l'inclinaison de la chaussée (4) dans l'au moins un sens spatial est déterminée à partir d'une différence de l'inclinaison de la carrosserie (6) dans l'au moins un sens spatial et de l'inclinaison du châssis dans l'au moins un sens spatial,
- dans lequel respectivement une valeur pour au moins un angle $\phi_s$, $\theta_s$ autour duquel la chaussée (4) est inclinée dans l'au moins un sens spatial, est déterminée,
- dans lequel respectivement une valeur limite ($\phi_{s,lim}$, $\theta_{s,lim}$ pour la valeur d'au moins un angle $\phi_s$, $\theta_s$ est prédéfinie,
- dans lequel des rapports de transmission ($i_{VA}$, $i_{HA}$) sont pris en considération pour une distance d'au mois un actionneur (12, 14, 58, 60) par rapport à la carrosserie (6) et pour une distance d'au moins une roue (8, 10, 54, 56) par rapport à la carrosserie (6),

- dans lequel une valeur de consigne pour une modification de la longueur d'au moins un actionneur (12, 14, 58, 60) est déterminée par :

$$\overrightarrow{\mathrm{Zakt}} = \mathrm{diag}(i_{VA}, i_{VA}, i_{HA}, i_{HA})T^T\begin{pmatrix}\phi s,\mathrm{lim}\\\theta s,\mathrm{lim}\end{pmatrix}$$

**2.** Procédé selon la revendication 1, dans lequel l'inclinaison du châssis dans l'au moins un sens spatial est déterminée par transformation des distances verticales d'au moins deux roues (8, 10, 54, 56) d'un centre de gravité (25) de la carrosserie (6) avec la matrice de transformation

$$T = \begin{bmatrix}\mathrm{lv} & \mathrm{lv} & -\mathrm{lh} & -\mathrm{lh}\\\mathrm{tv} & -\mathrm{tv} & \mathrm{th} & -\mathrm{th}\end{bmatrix}$$

dans lequel un parcours $l_v$ longitudinal avant décrit une distance d'une roue avant respective (8, 56) d'un centre de gravité (25) de la carrosserie (6) dans le sens spatial longitudinal, un parcours $l_h$ longitudinal arrière décrit la distance d'une roue arrière respective (10, 56) du centre de gravité (25) dans le sens spatial longitudinal, un parcours $t_v$ transversal avant décrit la distance de la roue avant (8, 54) du centre de gravité (25) dans le sens spatial transversal et un parcours $t_h$ transversal arrière décrit la distance de la roue arrière (10, 56) du centre de gravité (25) dans le sens spatial transversal.

**3.** Procédé selon la revendication 2, dans lequel les rapports de transmission $i_{VA}$, $i_{HA}$ sont calculés par une distance respectivement d'un actionneur (12, 14, 58, 60) du centre de gravité (25) de la carrosserie (6) et respectivement d'une roue (8, 10, 54, 56) du centre de gravité (25) de la carrosserie (6).

**4.** Procédé selon l'une quelconque des revendications précédentes, dans lequel en présence d'une entrée de pente un angle de tangage $\theta_s$ négatif et en présence d'une sortie de pente un angle de tangage $\theta_s$ positif est déterminé.

**5.** Procédé selon l'une quelconque des revendications précédentes, dans lequel la valeur limite respective $\phi_{s,\mathrm{lim}}$, $\theta_{s,\mathrm{lim}}$ est prédéfinie pour la valeur d'au moins un angle $\phi_s$, $\theta_s$ par :

$$\phi_{s,\mathrm{lim}} = \begin{cases}\phi s,\mathrm{max}\ \mathrm{si}\ \phi s > \phi s,\mathrm{max}\\\phi s,\mathrm{min}\ \mathrm{si}\ \phi s < \phi s,\mathrm{min}\end{cases}$$

$$\phi_s\ \mathrm{sinon}$$

$$\theta_{s,\mathrm{lim}} = \begin{cases}\theta s,\mathrm{max}\ \mathrm{si}\ \theta s > \theta s,\mathrm{max}\\\theta s,\mathrm{min}\ \mathrm{si}\ \theta s < \theta s,\mathrm{min}\end{cases}$$

$$\theta_s\ \mathrm{sinon}$$

**6.** Procédé selon la revendication 5, dans lequel une somme de $\theta_{s,\mathrm{min}}$ dans le cas de l'entrée de pente est choisie de façon à être supérieure à une somme de $\theta_{s,\mathrm{max}}$ dans le cas de la sortie de pente.

**7.** Procédé selon l'une quelconque des revendications précédentes, dans lequel pour la détermination de l'inclinaison de la carrosserie (6) un premier système de coordonnées (24) fixé à la carrosserie et pour la détermination de la pente du châssis un deuxième système de coordonnées (26) fixé au châssis sont utilisés, et dans lequel un troisième système de coordonnées (28) inertiel est utilisé en tant que système de coordonnées de référence qui se réfère à la force de gravité.

**8.** Procédé selon la revendication 7, dans lequel l'inclinaison de la carrosserie (6) est décrite par rapport au système de coordonnées de référence par un quaternion.

**9.** Procédé selon l'une quelconque des revendications précédentes, dans lequel un algorithme de montage direct est utilisé, avec lequel il est prévu que pour la détermination d'une accélération corrigée du véhicule (2) une accélération mesurée sensorielle soit corrigée d'une accélération centrifuge et de l'accélération gravitationnelle et à partir de celle-ci une vitesse du véhicule (2) soit déterminée dans un plan, et que l'inclinaison de la carrosserie (6) soit calculée.

**10.** Système de compensation d'une inclinaison d'un véhicule (2) dans au moins un sens spatial,

- dans lequel le véhicule (2) présente une carrosserie (6) et un châssis actif avec plusieurs roues (8, 10, 54, 56) qui se trouvent en contact avec la chaussée (4), dans lequel le système (16) présente plusieurs capteurs (19, 20, 22) et un appareil de contrôle (18),
- dans lequel chaque roue (8, 10, 54, 56) est raccordée par un actionneur (12, 14, 58, 60) réglable dans sa longueur sur un point de suspension (50) associé à la roue (8, 10, 54, 56) à la carrosserie (6),
- dans lequel au moins un premier capteur (19) est réalisé afin de déterminer une inclinaison de la carrosserie (6) dans l'au moins un sens spatial, dans lequel au moins un second capteur (20, 22) est réalisé afin de détecter pour au moins deux roues (8, 10, 54, 56) chaque fois une distance verticale du point de suspension (50) associé à la roue respective (8, 10, 54, 56) de la carrosserie (6),
- dans lequel l'appareil de contrôle (18) est réalisé afin de calculer par au moins deux distances déterminées des au moins deux roues (8, 10, 54, 56) une inclinaison du châssis dans l'au moins un sens spatial par transformation de la distance verticale des au moins deux roues (8, 10, 54, 56) de la carrosserie (6) avec une matrice de transformation

$$T = \begin{bmatrix} lv & lv & -lh & -lh \\ tv & -tv & th & -th \end{bmatrix}$$

- dans lequel l'appareil de contrôle (18) est réalisé afin de déterminer l'inclinaison de la chaussée (4) dans l'au moins un sens spatial à partir d'une différence de l'inclinaison de la carrosserie (6) dans l'au moins un sens spatial et l'inclinaison du châssis dans l'au moins un sens spatial, et respectivement une valeur pour au moins un angle $\phi_s$, $\theta_s$ duquel la chaussée (4) est inclinée dans l'au moins un sens spatial,
- dans lequel respectivement une valeur limite $\phi_{s,lim}$, $\theta_{s,lim}$ est prédéfinie pour la valeur d'au moins un angle $\phi_s$, $\theta_s$,
- dans lequel l'appareil de contrôle (18) est réalisé afin de prendre en considération des rapports de transmission $i_{VA}$, $i_{HA}$ pour une distance d'au moins un actionneur (12, 14, 58, 60) par rapport à la carrosserie et pour une distance d'au moins une roue (8, 10, 54, 56) par rapport à la carrosserie,
- dans lequel l'appareil de contrôle (18) est réalisé afin de déterminer une valeur de consigne pour une modification d'une longueur d'au moins un actionneur (12, 14, 58, 60) par :

$$\overrightarrow{Z_{akt}} = diag(i_{VA}, i_{VA}, i_{HA}, i_{HA})T^T\begin{pmatrix} \phi_{s,lim} \\ \theta_{s,lim} \end{pmatrix}$$

**11.** Système selon la revendication 10, dans lequel l'au moins un second capteur (20, 22) est réalisé en tant que capteur de distance.

Fig. 1

Fig. 2

Fig. 3

Fig. 4 a

Fig. 4 b

Fig. 4 c

EP 3 261 862 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006026937 A1
- DE 102012024984 A1
- DE 102012216205 A1
- DE 102004019928 A1
- GB 2391327 A